# EUROPEAN PATENT SPECIFICATION

(11) **EP 3 216 080 B1**
(45) Date of publication and mention of the grant of the patent: **20.05.2020**
(21) Application number: 14796741.8
(22) Date of filing: 06.11.2014
(51) Int. Cl.: H01M 12/08, H01M 8/04119, H01M 16/00, B60L 50/72, H01M 8/04007

(54) **SYSTEM AND METHOD FOR OPERATING A METAL AIR BATTERY WITH AMBIENT AIR**
SYSTEM UND VERFAHREN ZUM BETREIBEN EINER METALL-LUFT-BATTERIE MIT UMGEBUNGSLUFT
SYSTÈME ET PROCÉDÉ POUR FAIRE FONCTIONNER UNE BATTERIE MÉTAL-AIR AVEC L'AIR AMBIANT

(43) Date of publication of application: 13.09.2017
(73) Proprietor: Bayerische Motoren Werke Aktiengesellschaft, 80809 München (DE)
(72) Inventor: NÜRNBERGER, Simon, 83043 Bad Aibling (DE); LAMP, Peter, 86899 Landsberg am Lech (DE); OBERHUMER, Philipp, 80638 München (DE); PASCHOS, Odysseas, 80805 München (DE); TSIOUVARAS, Nikolaos, 80798 München (DE); HANDA, Tokuhiko, Tokyo 160-0004 (JP); NISHIKOORI, Hidetaka, Shizuoka 410-1113 (JP); INOUE, Toshihiko, Shizuoka 411-0044 (JP)
(74) Representative: Hahner, Ralph
(86) International application number: PCT/EP2014/073919
(87) International publication number: WO 2016/070924

(56) References cited:
- EP-B1- 1 377 477
- JP-A- 2010 009 896
- US-B1- 8 247 097
- PAUL ALBERTUS ET AL: "Overview of LiO2 Battery Systems, with a Focus on Oxygen Handling Requirements and Technologies", 28 February 2014 (2014-02-28), THE LITHIUM AIR BATTERY: FUNDAMENTALS, SPRINGER, US, PAGE(S) 291 - 310, XP008176817, page 307, line 21 - line 36

## Description

The invention concerns a system and a method for supplying electrical energy, particularly in a vehicle, wherein the system comprises a metal air battery, particularly lithium air battery, operated with ambient air, wherein the ambient air is dehumidified by adsorption dehumidification and/or absorption dehumidification.

Alternatively or additionally, the system can be used in stationary applications, for example as second life reuse after primary utilization in a vehicle.

Electric vehicles, including vehicles with a range extender meaning an internal combustion engine to produce electricity on long voyages, hybrid vehicles and derivates become more and more popular due to ecologic reasons, a limited supply of fossil fuels and research advances as well as legislature changes.

Particularly, a steady stream of advances in battery research and development has put large numbers of hybrid electric vehicles on city streets and highways. Additional advances are having a similar effect on so-called plug-in hybrids, hybrid automobiles that can be recharged at home. Despite these successes for electrically propelled cars, both types of hybrid vehicles strongly depend on petroleum-fueled internal combustion engines for distance driving.

In order to fully establish electric vehicles in the market, a storage battery of practical size and weight and affordable price is needed that can provide enough electrical energy in a single charge for a motorist to drive at least a few hundred miles. In light of these requirements, a focus of the electric vehicle industry in battery research is directed to so-called metal air batteries, which are, for example, described in U.S. patent 5,510,209.

These metal air batteries provide a high theoretical electrical capacity, particularly when the oxygen mass is excluded. This means that the oxygen needed for operating the metal air battery has to be taken from the ambient air instead of supplying it from an oxygen reservoir. When generating power, this oxygen reacts at the cathode of a lithium oxygen cell with lithium to LiO₂ and/or Li₂O₂. In this reaction one mole O₂ releases two moles electrons. Nevertheless, oxygen should not diffuse from the cathode to the anode since it penetrates into the anode degrading the anode.

For example, a high O₂ excess (overpressure) can lead to diffusion of oxygen through the electrolyte to the negative electrode side where it can lead to unwanted side-reactions, e.g. with the product Li₂O₂ at the anode. This leads to capacity loss and a limited cycle- and calendar lifetime of the metal air battery.

Further, when ambient air as O₂-source is utilized to operate a metal air battery in order to achieve the high energy densities desirable for mobile applications such as in vehicles, water has to be reliably removed from the ambient air in order to avoid undesired (devastating) reactions in the metal air battery, especially if the battery is a lithium air battery.

Even though the high energy density can be maintained with the use of the ambient air, at least a part of the energy available, such as electrical energy stored in the metal air battery, has to be used to dry the ambient air. This reduces the efficiency of a metal air battery considerably.

Therefore, in the prior art, instead of using a drying system to dry the ambient air, the use of oxygen-diffusion membranes is proposed as moisture barriers for the ambient air. For example, U.S. 2011/0059355 A1 discloses a metal air battery with an oxygen-removal membrane completely encasing a metal air battery.

Especially when envisaged for automobile applications, the power response of high capacity batteries such as metal air batteries tends to be slow. In particular the maximum power which can be drawn from such high capacity batteries is not enough to cover peak demands of vehicles, for example when accelerating or climbing an ascending slope. Furthermore, due to the functioning by chemical reaction, a variable control of the output of the high capacity batteries, such as metal air batteries, tends to be difficult since the chemical reaction can be controlled with a certain time-lag only.

In order to be able to better cover variable power rates and enhance the maximum power which can be delivered by an energy storage device, European patent 1 377 477 B1 proposes a power source for supplying electrical power to a driving motor comprising a first rechargeable energy battery and a second rechargeable power battery and a battery controller capable of controlling a substantially continuous recharging of the power battery with electrical energy from the energy battery.

When ambient air as O₂-source is used to operate a metal air battery in order to achieve the high energy densities desirable for mobile applications such as in vehicles, water and preferably other harmful molecules such as CO₂ have to be reliably removed from the ambient air in order to avoid undesired reactions in the metal air battery, especially if the battery is a lithium air battery.

In the prior art, the use of oxygen-diffusion membranes is proposed as moisture barriers for the ambient air. For example, U.S. 2011/0059355 A1 discloses a metal air battery with an oxygen-removal membrane completely encasing the battery.

The Publication Paul Albertus et al.: "Overview of LiO2 Battery Systems, with a Focus on Oxygen Handling Requirements and Technologies; Chapter 11; Section 11.5" In: "The Lithium Air Battery: Fundamentals", 28 February 2014, Springer Science + Business Media, New York, XP008176817, pages 306-308, proposes a design of an open system for lithium air batteries that removes contaminants from air and sends oxygen and inerts to a cell stack. One technology to separate air described by the document is temperature-swing adsorption. This is an adsorption onto solids, where a zeolite may be used for water (H2O) adsorption.

Document JP 2010 009896 A refers to a fuel cell system with a phosphoric acid fuel cell using a phosphoric acid electrolyte. In order to operate the fuel cell, the document discloses an air supply unit with an air compressor and two dehumidifying parts, two heating portions and two change-over valves. The air compressor outputs high-pressure air to be supplied to the cathode of the fuel cell via the first switching valve and the first and second dehumidifying parts.

Departing from this prior art it is an object of the present invention to provide a system and a method for supplying electrical energy, particularly to a vehicle, wherein the system comprises a metal air battery, particularly a lithium air battery, operated with ambient air allowing a safe, simple and energy efficient operation for supplying electrical energy. Another object of the present invention is to provide a system providing a continuous and reliable air dehumidification capable of covering high power peaks needed to operate an electrical vehicle while maintaining high energy efficiency.

These objects are achieved by a system for supplying electrical energy according to claim 1 and a method for supplying energy according to claim 13 of the present invention. Advantageous embodiments of the present invention are claimed in the depending claims.

The inventive system for supplying electrical energy, particularly in a vehicle, comprises a metal air battery, particularly a lithium air battery, operated with ambient air. The system preferably comprises further at least a first water remover and a second water remover each removing water from the ambient air, each comprising a water uptaking material and each operating by adsorption dehumidification and/or absorption dehumidification. Furthermore the system preferably comprises a first module being adapted to redirect thermal energy, particularly waste heat of the metal air battery, towards said at least one first water remover or the at least one second water remover, wherein said at least one first water remover and said at least one second water remover, particular the water uptaking material in each water remover, is adapted to be regenerated by thermal energy.

The inventive method for supplying electrical energy, particularly in a vehicle, comprises the following steps: operating a metal air battery, particularly a lithium air battery, with ambient air and removing water by adsorption dehumidification and/or absorption dehumidification from ambient air with at least a first water remover or at least a second water remover. Each water remover preferably comprises a water uptaking material. The method preferably further comprises the step of redirecting thermal energy, particularly waste heat, of at least the metal air battery towards the first water remover to regenerate the first water remover, particular its water uptaking material, by thermal energy during at least a first period while the second water remover dehumidifies the ambient air. In addition, the method comprises preferably the further steps of redirecting thermal energy, particularly waste heat of at least the metal air battery, towards the second water remover, particularly its water uptaking material, during at least the second period while the first water remover dehumidifies the ambient air.

A module in the sense of the invention is a hardware device with at least one element and/or software implemented to achieve a certain function.

A control unit in the sense of the invention is a microcontroller and/or software implemented to achieve a certain function.

The invention is based on the approach to use thermal energy generated by reactions in the metal air battery of the inventive system to operate a water remover for preparing and dehumidifying ambient air which is then delivered to the metal air battery to oxidize lithium at the anode in order to release electrical energy. By the inventive system and method, waste heat produced by the metal air battery can be particularly reused for the regeneration of the water remover system operating by adsorption dehumidification and/or absorption dehumidification. Furthermore with the inventive system and method, a reliable operation of a system for supplying electrical energy with a metal air battery can be assured by a steady supply of dry air appropriate for operating the metal air battery. This reliability is particularly achieved by the provision of at least two water removers which dehumidify ambient air and regenerate in alternate intervals. This configuration takes into account a high sensitivity of metal air batteries, particularly of lithium air batteries, to moisture while assuring a continuous dehumidification process by adsorbing and/or absorbing. With the inventive system and method, the electrical power efficiency of a system for supplying electrical energy comprising a metal air battery is strongly optimized. Due to the use of thermal energy to dehydrate the water uptaking material, the regeneration time of the water removers can be shortened. Smaller dehumidifying systems can be employed which leads to a volume optimization of the overall system for supplying electrical energy. This is particularly advantageous when such a system is used within mobile applications as in vehicles for electrical propulsion purposes. Additionally, in the case of a thermal event or accident in the system for supplying electrical energy comprising a metal air battery, hot gases can be directed towards the water remover where they can be cooled down.

In summary, the invention allows a continuous, simple and energy efficient operation of a system for supplying electrical energy comprising a metal air battery.

In an advantageous embodiment of the inventive system, the first module comprises a control unit adapted to control redirecting of thermal energy, particularly waste heat, of at least a metal air battery towards the first water remover to regenerate the first water remover, particularly its water uptaking material, by thermal energy during at least a first period while the second water remover dehumidifies the ambient air, and redirecting the thermal energy, particularly waste heat, of at least a metal air battery towards the second water remover to regenerate the second water remover, particularly its water uptaking material, by thermal energy during at least a second period while the first water remover dehumidifies the ambient air. By operating the first water remover and the second water remover in alternate intervals, a continuous water H₂O removal operation can be assured. Due to the fact that the at least two water removers can be regenerated at short intervals, the water removal capacity of each water remover can be chosen relatively small, allowing for a compact system design. Furthermore, the system allows the maintenance of one of the water removers while the other one is operating. The improved air dehumidification leads to higher lifetimes of metal air batteries since humidity does not arrive in the battery cell.

In a further preferred embodiment of the inventive system, the first module comprises a line system, particularly a heating circuit, for transporting a medium for transferring thermal energy to the first water remover and/or to the second water remover, wherein the first module is adapted to control the regeneration of each of the two water removers. Such a line system allows for an efficient energy transfer from the metal air battery towards the water remover.

In a further advantageous embodiment of the inventive system, the medium comprises an exhaust of the metal air battery and/or water. In the first case, exhaust gas of the metal air battery is used to regenerate the water remover. This is especially beneficial because the exhaust gas of the metal air battery has an extremely low humidity level, respectively is free of water, which is inherent to the system and has a high temperature accelerating the dehumidification process of the water uptaking material in the water remover. Further, since the exhaust gases are extremely dry, the energy requirement in this case can be highly reduced due to the fact that the temperature requirements for drying and using an extremely dry air are low. In the second case, alternatively or additionally to the exhaust gas water is used as a medium to transfer thermal energy, for example via heat exchangers to gas/air, being used to regenerate the water removers.

In a further advantageous embodiment of the inventive system, the first module comprises at least one heat exchanger to transfer thermal energy by the medium to ambient air entering the first water remover and/or the second water remover.

The first water remover and/or the second water remover further comprise a supporting structure, particularly a honeycomb structure, on which the adsorbing material and/or the absorbing material is loaded.

In a further advantageous embodiment of the inventive system, the water uptaking material in the water removers is a water adsorbent material, preferably silicate and more preferably zeolite. These materials are particularly adapted to adsorb water from the ambient air and can be regenerated by using heat and/or dry air.

In a further advantageous embodiment of the inventive system, the metal air battery is a high capacity battery, wherein the system further comprises a high power battery, particularly a lithium ion battery, a super capacitor, and/or any other electrochemical energy source device, wherein the high capacity battery and the high power battery form a battery hybrid system in which the high capacity battery is adapted to provide a substantially constant first electrical power and the high power battery is adapted to provide temporary a variable second electrical power, wherein the second electrical power is higher than the first electrical power and/or specific energy density of the high capacity battery is 1,5 to 200, preferably 1,5 to 50, more preferably 1,5 to 10, and most preferably 1,5 to 4,5 times higher than specific energy density of the high power battery. Such battery hybrid system provides a large range of advantages with respect to operating the application where a lot of different power requirements have to be covered, such as in vehicles with electrical propulsion.

In a further advantageous embodiment of the inventive system, the first module is further adapted to redirect thermal energy, particularly waste heat, of the high power battery to a first heat exchanger and/or to a second heat exchanger.

In a further advantageous embodiment of the inventive system, the system comprises an internal combustion engine, particularly a range extender, wherein the first module is further adapted to redirect thermal energy, particularly waste heat, from the internal combustion engine to the at least first water remover and/or the at least second water remover, particularly by integrating a cooling circuit of the internal combustion engine in a heating circuit of the first module.

By integrating further elements of the inventive system in the thermal energy recovery for water removal, the energy efficiency of the inventive system can be raised even more.

In a further advantageous embodiment of the inventive system, the system further comprises a sensor adapted to measure the humidity level of gas leaving the water remover and/or the second water remover, wherein a control unit is adapted to control the redirecting of thermal energy based on the measured level of humidity.

The aspects of the invention and the respective disclosed features with respect to the inventive system are also valid for the aspects of the invention and the respective advantageous embodiments of a vehicle comprising an electrical propulsion and a method for supplying electrical energy vice versa.

In an advantageous embodiment of an inventive vehicle, a first module is adapted to redirect waste thermal energy of further heat sources, particularly an electric propulsion and/or power electronics, in the vehicle to a first heat exchanger and/or to a second heat exchanger, particularly by integrating the respective heat sources in a heating circuit.

In an advantageous embodiment of the inventive method, the method further comprises the steps of supplying a substantially constant first electrical power by a high capacity battery, particularly a metal air battery, preferably a lithium air battery, and supplying a variable second power by a high power battery, preferably a lithium ion battery. Preferably, the method comprises the further steps of determining the power demand of a load, particularly an electrical propulsion, adapting the supplied second electrical power to the electrical power demand of the load and controlling the redirecting of the thermal energy and the regenerating of the first water remover and the second water remover based on a humidity level of gas leaving the first water remover and/or the second water remover, respectively. By controlling the regeneration of the water removers based on the dehumidification performance of the water removers, the penetration of water in the metal air battery can be reliably avoided.

In a further advantageous embodiment of the inventive method, the method comprises the step of charging the high power battery with energy from the high capacity battery, if the power delivered by the high capacity battery is higher than the power demand of the load.

Further advantageous aspects and examples of the present invention will be apparent from the description of the following figures:
Figure 1 shows at least partially schematically an example of the first preferred embodiment of the inventive system installed in a vehicle during a first operation interval;
Figure 2 shows partially schematically an example of the first preferred embodiment of the system installed in a vehicle during a second operation interval;
Figure 3 shows partially schematically an example of a second preferred embodiment of the inventive system installed in a vehicle comprising an internal combustion engine during a first operation interval;
Figure 4 shows partially schematically an example of the second preferred embodiment of the inventive system installed in a vehicle comprising an internal combustion engine during a second operation interval;
Figure 5 shows partially schematically a preferred embodiment of a water remover according to the present invention; and
Figure 6 shows partially schematically a sequence of steps representing a preferred embodiment of the inventive method.

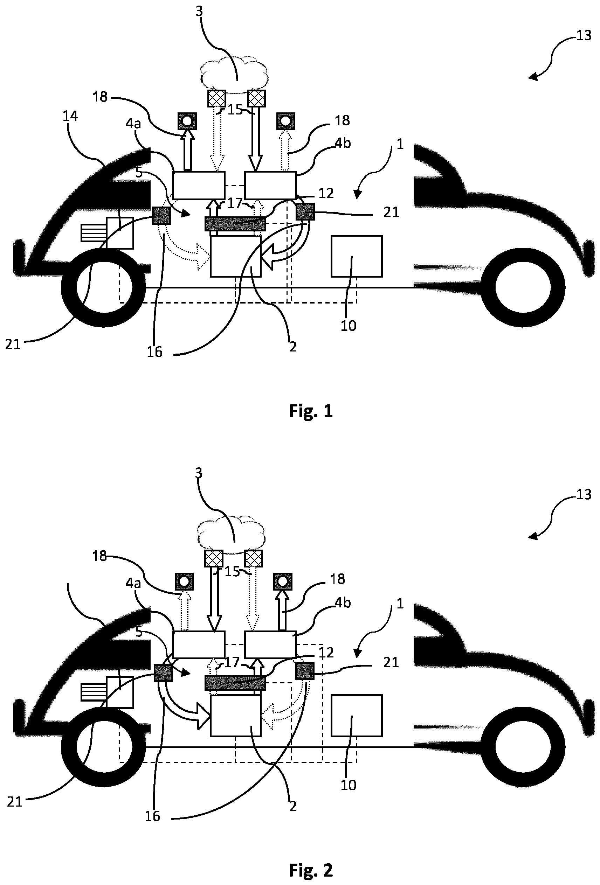

Figure 1 shows a first embodiment of an inventive system 1 for supplying electrical energy in a vehicle 13.

The system 1 comprises a metal air battery 2, particularly a lithium air battery. This metal air battery 2 being a high capacity battery is operated in a manner to provide a substantially constant power to the vehicle 13. The oxygen O₂ needed to oxidize the Lithium Li when generating electrical energy is taken from ambient air 3. Since the ambient air 3 also comprises water H₂O which could damage the metal air battery 2 when being introduced in the battery 2, a water remover 4 dehumidifies wet air 15 being aspirated, preferably via a filter element, from the ambient air 3. Dried air 16 is then provided to the metal air battery 2, preferably by a line system 6. Further preferably a compressor 21 is provided to change the pressure of the dried air 16, for example to compensate a pressure loss in the metal air battery 2.

In the metal air battery 2, oxygen of the dried air 16, preferably also being freed from CO₂, reacts at the cathode of the metal air battery 2 with the lithium to LiO₂ or Li₂O₂ releasing electrons which build up a potential supplying electrical power to the vehicle 13. During the reaction in the metal air battery 2, the dried air 16 is heated by reaction energy. Resulting warm dry gas 17, preferably poor in oxygen or even free of oxygen, is then led back to the water remover 4, preferably via the line system 6. In the water removers 4a, 4b, the warm dry gas 17 is used to operate a dehumidification or drying process. Thereafter, wet exhaust gas 18 preferably leaves the water removers 4a, 4b and also preferably the vehicle 13 via an exhaust pipe. Preferably, this wet exhaust gas 18 is again cooled down compared to the warm dry gas 17 introduced in the water removers 4a, 4b.

As indicated by the dotted and continuous arrows 15, 16, 17 and 18, warm dry gas 17 used to operate the dehumidification process in the water removers 4a, 4b is redirected in alternate intervals to each of the water removers 4a, 4b. Accordingly, the water removers 4a, 4b operate in alternative intervals to dehumidify the wet air 15.

In the interval according to Figure 1, water remover 4a dehumidifies wet air 15 while water uptaking material in the second water remover 4b is regenerated by the warm dry gas exhausted by the metal air battery 2. During the interval according to Figure 2, wet air 15 is dehumidified by the second water remover 4b and then provided to the metal air battery 2, while the warm dry gas 17 exhausted by the metal air battery 2 is used to regenerate the water uptaking material in the first water remover 4a. In every case, the wet gas 18 comprising water taken from the water uptaking material is preferably exhausted to the atmosphere afterwards.

Preferably, especially during a starting phase of the system 1 for supplying electrical energy, an additional heater 12 may be employed to heat up the warm dry gas 17 led to the water removers 4a, 4b in order to ensure the functioning of the dehumidification process in the water removers 4a, 4b. The additional heater 12 is preferably operated with electricity from the electrical network of the system 1 and/or of vehicle 13, respectively, which is indicated by dotted lines in Figure 1 or by a public electrical grid. The electrical network of the vehicle 13 further comprises a connection to electrical propulsion 14 as well as the system 1 preferably comprises a further high power battery 10, preferably a lithium ion battery, a super capacitor and/or any other electrical energy storage device.

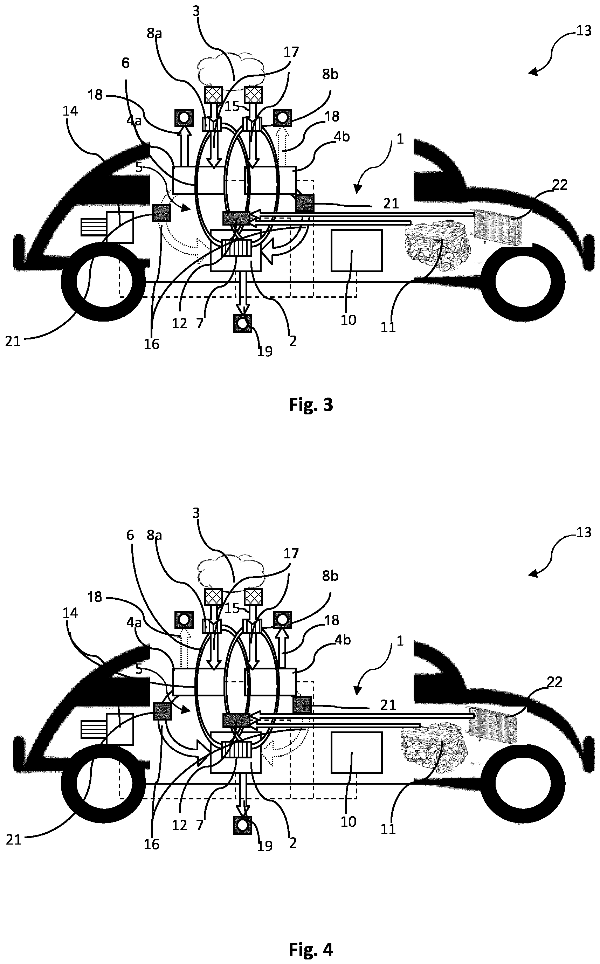

The second preferred embodiment of the inventive system 1 is shown in Figures 3 and 4 and differs from the first embodiment in that the water removers 4a, 4b are not directly operated with the warm dry gas 17 exhausted by the metal air battery 2 but in that the thermal energy, in particular waste heat of the metal air battery 2, is primarily transferred to the water removers 4a, 4b by a heating circuit 6, preferably also being part of the first module 5. Instead of the warm dry gas 17 exhausted by the metal air battery 2, an additional carrier medium to transfer thermal energy, particularly water, is used to transfer thermal energy of the metal air battery 2 to the heat exchangers 8a, 8b. Therefore, the first module 5 comprises preferably a heat exchanger 7 which is located preferably at or in the metal air battery 2 and is adapted to transfer thermal energy dissipated by the metal air battery 2 to the medium in the heating circuit 6. A first heat exchanger 8a is arranged at or in the first water remover 4a adapted to heat the wet air 15 before entering the first water remover 4a by the thermal energy comprised in the medium. Exhaust gas 19 of the metal air battery cooled down by the heat exchanger 8 associated to the metal air battery 2 is preferably ejected in the environment by an exhaust pipe directly from the metal air battery 2 in the second embodiment.

Similar to the first embodiment of the inventive system 1, dotted arrows and continuous arrows in Figures 3 and 4 indicate that the water removers 4a, 4b of the second embodiment are operated and regenerated in alternate intervals. In the first interval, shown in Figure 3, wet air 15 is aspirated from the ambient air 3 via a first heat exchanger 8a to the first water remover 4a. In the first water remover 4a, the wet air 15 is dehumidified. Preferably, the wet air 15 is warmed by the first heat exchanger 8a even though this is not a condition for the functioning of the dehumidification process by adsorption and/or absorption in the first water remover 4a. Dried air 16 dried by the first water remover 4a is then provided to the metal air battery 2 for its operation. Preferably a compressor 21 is provided to change the pressure of the dried air 16, for example to compensate a pressure loss in the metal air battery 2. The compressed dried air 16 may preferably have to be cooled by a further cooling system in case it exceeds a certain temperature level.

Thermal energy dissipated by the metal air battery 2, particularly thermal energy comprised in the exhaust gas of the metal air battery 2, is transferred by a heat exchanger 7 to a medium in the heating circuit 6. The cooled down exhaust gas 19 of the metal air battery 2 leaves the system 1 and/or vehicle 13 via an exhaust pipe. The thermal energy transferred to the medium in the heating circuit 6 is transferred by the heating circuit 6 to the first and/or second heat exchangers 8a, 8b. At least the second heat exchanger 8b uses this thermal energy to heat the aspirated wet air 15. This lowers the relative humidity in the wet air 15 and the resulting warm wet air 17 is used to dehumidify water uptaking material in the second water remover 4b. Afterwards, this wet gas 18 is ejected via an exhaust pipe of the system 1 or the vehicle 13 to the environment.

In the second interval as shown in Figure 4, the first water remover 4a is regenerated and the second water remover 4b dehumidifies the aspirated wet air 15 and provides dried air 16 to the metal air battery 2. In this case, at least the first heat exchanger 8a is used to heat the aspirated wet air 15 to lower the relative humidity level of the aspirated wet air 15 such that this warm air can be used to regenerate the first water remover 4a.

As in the first embodiment shown in Figures 1 and 2, the system 1 according to the second preferred embodiment preferably comprises an additional heater 12 in order to heat the medium in the heating circuit 6. This additional heater 12 is preferably heated by electricity from the electric network of the inventive system 1 and/or the vehicle 13 or by the public grid. Additionally, the additional heater 12 may be heated by waste energy produced by the internal combustion engine 11, preferably a range extender, which is preferably part of the system 1 or other heat sources in the vehicle, such as the waste heat of a cooling circuit 22.

The different features as shown in the first preferred embodiment of Figures 1 and 2 and in the second preferred embodiment of Figures 3 and 4 can be combined without any further ado. In particular, the first preferred embodiment may also comprise a heating circuit 6 as shown with respect to the second embodiment in Figure 3 and 4 with a heat exchanger associated to the metal air battery 2, a first heat exchanger 8a and a second heat exchanger 8b heating up wet air 15 aspirated from the ambient air 3. In this case, in the first preferred embodiment, not only the heat in the warm dry gas 17 exhausted by the metal air battery 2 is used to operate the water removers 4a, 4b, but also thermal energy dissipated by the metal air battery 2 and not captured by the warm dry gas 17 is used for the regeneration of the water removers 4a, 4b. Additionally, in the first embodiment, the system 1 may also comprise an internal combustion engine 11. Waste thermal energy from this internal combustion engine 11 is preferably transferred as well to an additional heater 12, the further thermal energy resulting from the combustion while generating electric energy by a generator or propelling the vehicle 13.

Furthermore, the first module 5 of system 1 is preferably adapted to redirect waste thermal energy from further heat sources of the vehicle 13 and/or the system 1, particularly from the electric propulsion 14 and/or power electronics, to the first heat exchanger 8a, the second heat exchanger 8b and or the additional heater 12. Preferably, these heat sources are also integrated in a heating circuit 6 as shown with respect to the second embodiment but which is also applicable to the first embodiment.

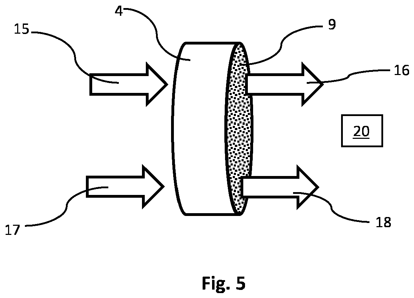

A The preferred embodiment of the water remover 4a, 4b is shown in Figure 5. The water remover 4a, 4b comprises a supporting structure 9 on which a water adsorbing material and/or a water absorbing material is loaded. During the operation period, wet air 15 entering the water remover 4a, 4b circulates around a supporting structure 9 and water molecules adhere to the surface of an adsorbent material or enter in an absorbent material. Dry air 16 leaving the water remover 4a, 4b is free of any water molecules. The remaining level of humidity is preferably measured by a humidity sensor 20. During the regeneration period, warm air having a relatively low relative humidity or warm dry air 17 exhausted from the metal air battery 2 enters the water remover 4a, 4b, also circulating around the supporting structure 9, thereby removing particles from the surface of the adsorbing material and/or from the inner of the adsorbing material on the supporting structure 9. Therefore, the warm exhaust gas 18 leaving the water remover 4 has a high relative and absolute humidity. The at least one gas sensor 20 preferably measures also a humidity level of the wet exhaust gas 18.

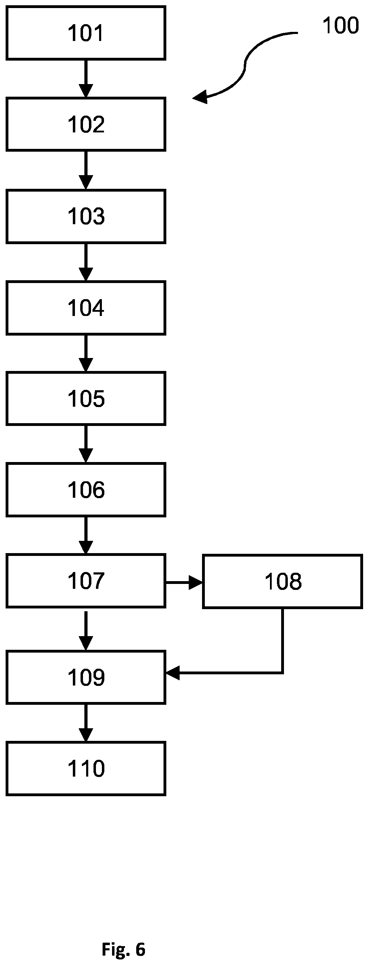

Figure 6 shows a preferred embodiment of the inventive method 100 to operate the system 1 as specified with respect to Figures 1, 2, 3 and 4. It is evident to the person skilled in the art that the steps shown in Figure 6 may be also arranged in a different order.

In the inventive method 100, defined in claim 13, a metal air battery 2, particularly a lithium air battery, is operated with ambient air 3, 101. Water is removed from the ambient air 3 by adsorption dehumidification and/or absorption dehumidification with a first water remover 4a or a second water remover 4b, each comprising water uptaking material 102. Thermal energy, particularly waste heat, of at least a metal air battery 2 is redirected towards the first water remover 4a to regenerate the first water remover 4a, particularly its water uptaking material, by thermal energy during at least a first period T1 while the second water remover 4b dehumidifies the ambient air 3, 103. During a second period T2, energy, particularly waste heat, of at least the metal air battery 2 is redirected towards the second water remover 4b to regenerate the second water remover 4b, particularly its water uptaking material, by thermal energy during at least a second period T2 while the first water remover 4a dehumidifies the ambient air 3, 104. By this process, preferably a substantially constant first electrical power is supplied by the metal air battery 2, 105. Further preferably, a variable second electrical power is supplied by a high power battery 10, preferably a lithium ion battery, 106. Preferably, a power demand of a load, particularly an electrical propulsion 14, is determined 107, and the supplied second electrical power is adapted to the electrical power demand of the load. Further preferably, the redirecting of the thermal energy and the regenerating of the first water remover 4a and the second water remover 4b is controlled based on a humidity level in the gas 16, 18 leaving the first water remover 4a and/or the second water remover 4b, respectively. Further preferably, the high power battery 10 is charged with electrical energy from the high capacity battery 2, if the power delivered by the high capacity battery 2 is higher than the power demand of the load.

### LIST OF REFERENCE NUMERALS

- 1: System
- 2: Metal air battery
- 3: Ambient air
- 4a: First water remover
- 4b: Second water remover
- 5: First module
- 6: Line system
- 7, 8a, 8b: Heat exchanger
- 9: Supporting structure
- 10: High power battery
- 11: Internal combustion engine
- 12: Additional heater
- 13: Vehicle
- 14: Electrical propulsion
- 15: Wet air
- 16: Dry air
- 17: Warm dry gas
- 18: Wet exhaust gas
- 19: Dry exhaust gas
- 20: Humidity sensor
- 21: Air compressor
- 22: Cooling system

## Claims

1. System (1) for supplying electrical energy, comprising:
a metal air battery (2), particularly a lithium air battery, operated with ambient air (3);
a first water remover (4a) and a second water remover (4b) each removing water from the ambient air (3), each comprising a water uptaking material and each operating by adsorption dehumidification and/or absorption dehumidification, and
a first module (5) adapted to redirect thermal energy, particularly waste heat, of the metal air battery (2) towards the first water remover (4a) or the second water remover (4b),
wherein the first water remover (4a) and the second water remover (4b), particularly the water uptaking material in each water remover (4a 4b), is adapted to be regenerated by thermal energy,
wherein the first water remover and/or the second water remover comprise a supporting structure (9), particularly a honeycomb structure, on which the adsorbing material and/or the absorbing material is loaded and wherein, during a regeneration period, warm air having a low relative humidity or warm dry air (17) exhausted from the metal air battery (2) enters the water remover (4a, 4b) circulating around the supporting structure (9).

2. System (1) according to claim 1, wherein the first module (5) comprises a control unit adapted to control redirecting of thermal energy, particularly waste heat, of at least the metal air battery (2) towards the first water remover (4a) to regenerate the first water remover (4a), particularly its water uptaking material, by thermal energy during at least a first period (T1) while the second water remover (4b) dehumidifies the ambient air (3), and redirecting of thermal energy, particularly waste heat, of at least the metal air battery (2) towards the second water remover (4b) to regenerate the second water remover (4b), particularly its water uptaking material, by thermal energy during at least a second period (T2) while the first water remover (4a) dehumidifies the ambient air (3).

3. System (1) according to claim 1 or 2, wherein the first module (5) comprises a line system (6), particularly a heating circuit, for transporting a medium for transferring thermal energy to the first water remover (4a) and/or to the second water remover (4b), wherein the first module (5) is adapted to control the regeneration of each of the two water removers (4a, 4b).

4. System (1) according to claim 3, wherein the medium comprises an exhaust gas (17) of the metal air battery (2) and/or water.

5. System (1) according to claim 3 or 4, wherein the first module (5) comprises at least one heat exchanger (7, 8a, 8b) to transfer thermal energy via the medium to a gas 17 entering the first water remover (4a) and/or the second water remover (4b).

6. System (1) according to one of the preceding claims, wherein the water uptaking material in the water removers (4a, 4b) is a water adsorbent material, preferably silicate and more preferably zeolite.

7. System (1) according to one of the preceding claims, wherein the metal air battery (2) is a high capacity battery, wherein the system (1) further comprises a high power battery (10), particularly a lithium ion battery, a super capacitor, and/or any other electrochemical energy storage device, wherein the high capacity battery (2) and the high power battery (10) form a battery hybrid system in which the high capacity battery (2) is adapted to provide a substantially constant first electrical power and the high power battery (10) is adapted to provide temporary a variable second electrical power, wherein the second electrical power is higher than the first electrical power and/or specific energy density of the high capacity battery (2) is 1,5 to 200, preferably 1,5 to 50, more preferably 1,5 to 10 and most preferably 1,5 to 4,5 times higher than specific energy density of the high power battery (10).

8. System (1) according to claim 7, wherein the first module (5) is further adapted to redirect thermal energy, particularly waste heat, of the high power battery (2) to a first heat exchanger (8a) and/or to a second heat exchanger (8b).

9. System (1) according to one of the preceding claims, further comprising an internal combustion engine (11), particularly a range extender, wherein the first module (5) is further adapted to redirect thermal energy, particularly waste heat, from the internal combustion engine (11) to the at least first water remover (4a) and/or to the at least second water remover (4b), particularly by integrating a cooling circuit of the internal combustion engine (11) in a heating circuit (6) of the first module (5).

10. System (1) according to one of claims 2 to 9 , further comprising a sensor (20) adapted to measure the humidity level of gas (16, 18) leaving the first water remover and/or the second water remover, wherein the control unit is adapted to control the redirecting of thermal energy based on the measured level of humidity.

11. Vehicle (13) comprising electrical propulsion (14), wherein electrical energy used for the electrical propulsion (14) is stored in a system (1) according to one of claims 1 to 10.

12. Vehicle (13) according to claim 11, wherein the first module (5) is adapted to redirect waste thermal energy from further heat sources, particularly the electrical propulsion (14) and/or power electronics, in the vehicle (13) to a first heat exchanger (8a) and/or a second heat exchanger (8b), particularly by integrating the respective heat sources in a heating circuit (6).

13. Method (100) for supplying electrical energy, comprising the following steps:
Operating (101) a metal air battery (2), particularly a lithium air battery, with ambient air (3);
removing water (102) by adsorption dehumidification and/or absorption dehumidification from the ambient air (3) with a first water remover (4a) or a second water remover (4b) each comprising a water uptaking material;
redirecting (103) thermal energy, particularly waste heat, of at least the metal air battery (2) towards the first water remover (4a) to regenerate the first water remover (4a), particularly its water uptaking material, by thermal energy during at least a first period while the second water remover (4b) dehumidifies the ambient air (3); and
redirecting (104) thermal energy, particularly waste heat, of at least the metal air battery (2) towards the second water remover (4b) to regenerate the second water remover (4b), particularly its water uptaking material, by thermal energy during at least a second period while the first water remover (4a) dehumidifies the ambient air (3),
wherein the first water remover and/or the second water remover comprise a supporting structure (9), particularly a honeycomb structure, on which the adsorbing material and/or the absorbing material is loaded and wherein, during a regeneration period, warm air (18) having a low relative humidity or warm dry air (17) exhausted from the metal air battery (2) enters the water remover (4a, 4b) circulating around the supporting structure (9).

14. Method (100) according to claim 13, further comprising the following steps:
supplying (105) a substantially constant first electrical power by the metal air battery (2);
supplying (106) a variable second electrical power by a high power battery (10), preferably a lithium ion battery;
adapting (107) the supplied second electrical power to an electrical power demand of a load, particularly an electrical propulsion (14);
determining (109) a level of humidity of a gas (16, 18) leaving the first water remover (4a) and/or the second water remover (4b), respectively; and
controlling (110) the redirecting of the thermal energy and the regenerating (103, 104) of the first water remover (4a) and the second remover (4b) based on the humidity level of the gas (16, 18) leaving the first water remover (4a) and/or the second water remover (4b), respectively.

15. Method (109) according claim 14, further comprising the following step: charging (108) the high power battery (10) with electrical energy from the high capacity battery (2), if the power delivered by the high capacity battery (2) is higher than the power demand of the load.

## Patentansprüche

1. System (1) zum Bereitstellen von elektrischer Energie, aufweisend:
eine Metall-Luft-Batterie (2), insbesondere eine Lithium-Luftbatterie, die mit Umgebungsluft (3) betrieben wird;
einen ersten Wasserentferner (4a) und einen zweiten Wasserentferner (4b), die jeweils Wasser aus der Umgebungsluft (3) entfernen, die jeweils ein wasseraufnehmendes Material aufweisen und jeweils basierend auf Adsorptionsentfeuchtung und/oder Absorptionsentfeuchtung arbeiten, und
ein erstes Modul (5), das geeignet ist, thermische Energie, insbesondere Abwärme, der Metall-Luft-Batterie (2) zum ersten Wasserentferner (4a) oder zweiten Wasserentferner (4b) hin umzuleiten,
wobei der erste Wasserentferner (4a) und der zweite Wasserentferner (4b), insbesondere das Wasseraufnahmematerial in jedem Wasserentferner (4a 4b), geeignet ist, durch Wärmeenergie regeneriert zu werden,
wobei der erste Wasserentferner und/oder der zweite Wasserentferner eine Stützstruktur (9), insbesondere eine Wabenstruktur, aufweist, auf die das Adsorptionsmaterial und/oder das Absorptionsmaterial aufgebracht ist, und wobei während einer Regenerationsphase warme Luft mit einer niedrigen relativen Feuchtigkeit oder warme Trockenluft (17), die von der Metall-Luft-Batterie (2) abgelassen wird, in den Wasserentferner (4a, 4b) eintritt und um die Stützstruktur (9) herum zirkuliert.

2. System (1) nach Anspruch 1, wobei das erste Modul (5) eine Steuereinheit aufweist, die zum Steuern der Umleitung von Wärmeenergie, insbesondere von Abwärme, mindestens der Metall-Luft-Batterie (2) zum ersten Wasserentferner (4a) hin ausgelegt ist, um den ersten Wasserentferner (4a), insbesondere sein Wasseraufnahmematerial, durch Wärmeenergie während mindestens einer ersten Phase (T1) zu regenerieren, während der zweite Wasserentferner (4b) die Umgebungsluft (3) entfeuchtet, und Umlenken von Wärmeenergie, insbesondere Abwärme, mindestens der Metall-Luft-Batterie (2) zum zweiten Wasserentferner (4b) hin, um den zweiten Wasserentferner (4b), insbesondere sein Wasseraufnahmematerial, durch Wärmeenergie während mindestens einer zweiten Phase (T2) zu regenerieren, während der erste Wasserentferner (4a) die Umgebungsluft (3) entfeuchtet.

3. System (1) nach Anspruch 1 oder 2, wobei das erste Modul (5) ein Leitungssystem (6), insbesondere einen Heizkreis, zum Transportieren eines Mediums zum Übertragen von Wärmeenergie zum ersten Wasserentferner (4a) und/oder zum zweiten Wasserentferner (4b) hin, aufweist, wobei das erste Modul (5) zum Steuern der Regeneration jedes der beiden Wasserentferner (4a, 4b) eingerichtet ist.

4. System (1) nach Anspruch 3, wobei das Medium ein Abgas (17) der Metall-Luft-Batterie (2) und/oder Wasser aufweist.

5. System (1) nach Anspruch 3 oder 4, wobei das erste Modul (5) mindestens einen Wärmetauscher (7, 8a, 8b) aufweist, um Wärmeenergie über das Medium an ein Gas (17) zu übertragen, das in den ersten Wasserentferner (4a) und/oder in den zweiten Wasserentferner (4b) eintritt.

6. System (1) nach einem der vorstehenden Ansprüche, wobei das wasseraufnehmende Material in den Wasserentfernern (4a, 4b) ein wasseradsorbierendes Material, vorzugsweise Silikat und bevorzugter Zeolith, ist.

7. System (1) nach einem der vorstehenden Ansprüche, wobei die Metall-Luft-Batterie (2) eine Batterie hoher Kapazität ist, wobei das System (1) ferner eine Hochleistungsbatterie (10), insbesondere eine Lithium-Ionen-Batterie, einen Superkondensator und/oder eine andere elektrochemische Energiespeichervorrichtung aufweist, wobei die Batterie hoher Kapazität (2) und die Hochleistungsbatterie (10) ein Batteriehybridsystem bilden, in dem die Batterie hoher Kapazität (2) geeignet ist, eine im Wesentlichen konstante erste elektrische Leistung bereitzustellen, und die Hochleistungsbatterie (10) geeignet ist, vorübergehend eine variable zweite elektrische Leistung bereitzustellen, wobei die zweite elektrische Leistung höher ist als die erste elektrische Leistung und/oder die spezifische Energiedichte der Batterie hoher Kapazität (2) 1,5 bis 200, vorzugsweise 1,5 bis 50, bevorzugter 1,5 bis 10 und am bevorzugtesten 1,5 bis 4,5 mal höher als die spezifische Energiedichte der Hochleistungsbatterie (10) ist.

8. System (1) nach Anspruch 7, wobei das erste Modul (5) ferner geeignet ist, thermische Energie, insbesondere Abwärme, der Batterie hoher Kapazität (2) auf einen ersten Wärmetauscher (8a) und/oder einen zweiten Wärmetauscher (8b) hin umzuleiten.

9. System (1) nach einem der vorstehenden Ansprüche, ferner aufweisend einen internen Verbrennungsmotor (11), insbesondere einen Reichweitenverlängerer, wobei das erste Modul (5) ferner eingerichtet ist, thermische Energie, insbesondere Abwärme vom Verbrennungsmotor (11), zum mindestens ersten Wasserentferner (4a) und/oder zum mindestens zweiten Wasserentferner (4b) hin umzuleiten, insbesondere durch Integration eines Kühlkreislaufs des internen Verbrennungsmotors (11) in einen Heizkreis (6) des ersten Moduls (5).

10. System (1) nach einem der Ansprüche 2 bis 9, ferner aufweisend einen Sensor (20), der geeignet ist, den Feuchtigkeitsgehalt von Gas (16, 18) zu messen, das den ersten Wasserentferner und/oder den zweiten Wasserentferner verlässt, wobei die Steuereinheit geeignet ist, die Umleitung von Wärmeenergie basierend auf dem gemessenen Feuchtigkeitsgehalt zu steuern.

11. Fahrzeug (13) mit elektrischem Antrieb (14), wobei die für den elektrischen Antrieb (14) verwendete elektrische Energie in einem System (1) nach einem der Ansprüche 1 bis 10 gespeichert ist.

12. Fahrzeug (13) nach Anspruch 11, wobei das erste Modul (5) zum Umleiten von Abwärmeenergie aus weiteren Wärmequellen, insbesondere dem elektrischen Antrieb (14) und/oder der Leistungselektronik, im Fahrzeug (13) zu einem ersten Wärmetauscher (8a) und/oder einem zweiten Wärmetauscher (8b), insbesondere durch Integrieren der jeweiligen Wärmequellen in einen Heizkreis (6), eingerichtet ist.

13. Verfahren (100) zum Bereitstellen von elektrischer Energie, aufweisend die folgenden Schritte:
Betreiben (101) einer Metall-Luft-Batterie (2), insbesondere einer Lithium-Luftbatterie, mit Umgebungsluft (3);
Entfernen von Wasser (102) durch Adsorptionsentfeuchtung und/oder Absorptionsentfeuchtung aus der Umgebungsluft (3) mit einem ersten Wasserentferner (4a) oder einem zweiten Wasserentferner (4b), die jeweils ein wasseraufnehmendes Material aufweisen;
Umleiten (103) von Wärmeenergie, insbesondere Abwärme, mindestens der Metall-Luft-Batterie (2), zum ersten Wasserentferner (4a) hin, um den ersten Wasserentferner (4a), insbesondere sein wasseraufnehmendes Material, durch Wärmeenergie während mindestens einer ersten Phase zu regenerieren, während der zweite Wasserentferner (4b) die Umgebungsluft (3) entfeuchtet; und
Umleiten (104) von Wärmeenergie, insbesondere Abwärme, mindestens der Metall-Luft-Batterie (2) zum zweiten Wasserentferner (4b) hin, um den zweiten Wasserentferner (4b), insbesondere sein wasseraufnehmendes Material, durch Wärmeenergie während mindestens einer zweiten Phase zu regenerieren, während der erste Wasserentferner (4a) die Umgebungsluft (3) entfeuchtet,
wobei der erste Wasserentferner und/oder der zweite Wasserentferner eine Stützstruktur (9), insbesondere eine Wabenstruktur, aufweist, auf die das Adsorptionsmaterial und/oder das Absorptionsmaterial aufgebracht ist, und wobei während einer Regenerationsphase warme Luft (18) mit einer geringen relativen Feuchtigkeit oder warme Trockenluft (17), die von der Metall-Luft-Batterie (2) abgelassen wird, in den Wasserentferner (4a, 4b) eintritt und um die Trägerstruktur (9) zirkuliert.

14. Verfahren (100) nach Anspruch 13, ferner aufweisend die folgenden Schritte:
Bereitstellen (105) einer im Wesentlichen konstanten ersten elektrischen Leistung durch die Metall-Luft-Batterie (2);
Bereitstellen (106) einer variablen zweiten elektrischen Leistung durch eine Hochleistungsbatterie (10), vorzugsweise eine Lithium-Ionen-Batterie;
Anpassen (107) der bereitgestellten zweiten elektrischen Leistung an einen elektrischen Leistungsbedarf einer Last, insbesondere eines elektrischen Antriebs (14);
Bestimmen (109) eines Feuchtigkeitsniveaus eines Gases (16, 18), das den ersten Wasserentferner (4a) und/oder den zweiten Wasserentferner (4b) verlässt; und
Steuern (110) der Umleitung der Wärmeenergie und der Regeneration (103, 104) des ersten Wasserentferners (4a) und des zweiten Entferners (4b) basierend auf dem Feuchtigkeitsniveau des Gases (16, 18), das den ersten Wasserentferner (4a) bzw. den zweiten Wasserentferner (4b) verlässt.

15. Verfahren (109) nach Anspruch 14, ferner aufweisend den folgenden Schritt:
Laden (108) der Hochleistungsbatterie (10) mit elektrischer Energie aus der Batterie hoher Kapazität (2), wenn die von der Batterie hoher Kapazität (2) abgegebene Leistung höher ist als der Leistungsbedarf der Last.

## Revendications

1. Système (1) d'alimentation en énergie électrique, comprenant :
une batterie métal-air (2), en particulier une batterie lithium-air, fonctionnant avec de l'air ambiant (3) ;
un premier dispositif d'élimination d'eau (4a) et un deuxième dispositif d'élimination d'eau (4b) éliminant respectivement de l'eau de l'air ambiant (3), comprenant respectivement un matériau d'absorption d'eau et fonctionnant respectivement par déshumidification par adsorption et/ou par déshumidification par absorption, et un premier module (5) adapté pour rediriger de l'énergie thermique, en particulier de la chaleur perdue, de la batterie métal-air (2) vers le premier dispositif d'élimination d'eau (4) ou le deuxième dispositif d'élimination d'eau (4b),
dans lequel le premier dispositif d'élimination d'eau (4a) et le deuxième dispositif d'élimination d'eau (4b), en particulier le matériau d'absorption d'eau dans chaque dispositif d'élimination d'eau (4a, 4b), sont adaptés pour être regénérée par de l'énergie thermique,
dans lequel le premier dispositif d'élimination d'eau et/ou le deuxième dispositif d'élimination d'eau comprennent une structure de support (9), en particulier une structure en nid d'abeille, sur laquelle le matériau d'adsorption et/ou le matériau d'absorption sont chargés, et dans lequel, pendant une période de régénération, de l'air chaud ayant une humidité relative faible ou de l'air sec chaud (17) rejeté de la batterie métal-air (2) entrent dans le dispositif d'élimination d'eau (4a, 4b) tout en circulant autour de la structure de support (9).

2. Système (1) selon la revendication 1, dans lequel le premier module (5) comprend une unité de contrôle adaptée pour contrôler la redirection d'énergie thermique, en particulier de chaleur perdue, d'au moins la batterie métal-air (2) vers le premier dispositif d'élimination d'eau (4a) pour régénérer le premier dispositif d'élimination d'eau (4a), en particulier son matériau d'absorption d'eau, par de l'énergie thermique pendant au moins une première période (Tl), alors que le deuxième dispositif d'élimination d'eau (4b) déshumidifie l'air ambiant (3), et pour rediriger de l'énergie thermique, en particulier de la chaleur perdue, d'au moins la batterie métal-air (2) vers le deuxième dispositif d'élimination d'eau (4b) pour le deuxième dispositif d'élimination d'eau (4b), en particulier son matériau d'absorption d'eau, par de l'énergie thermique pendant au moins une deuxième période (T2) alors que le premier dispositif d'élimination d'eau (4a) déshumidifie l'air ambiant (3).

3. Système (1) selon la revendication 1 ou 2, dans lequel le premier module (5) comprend un système de ligne (6), en particulier un circuit de chauffage, pour transporter un milieu servant au transfert d'énergie thermique vers le premier dispositif d'élimination d'eau (4a) et/ou le deuxième dispositif d'élimination d'eau (4b), dans lequel le premier module (5) est adapté pour contrôler la régénération de chacun des deux dispositifs d'élimination d'eau (4a, 4b).

4. Système (1) selon la revendication 3, dans lequel le milieu comprend un gaz d'échappement (17) de la batterie métal-air (2) et/ou de l'eau.

5. Système (1) selon la revendication 3 ou 4, dans lequel le premier module (5) comprend au moins un échangeur de chaleur (7, 8a, 8b) pour transférer de l'énergie thermique par l'intermédiaire du milieu vers un gaz (17) entrant dans le premier dispositif d'élimination d'eau (4a) et/ou le deuxième dispositif d'élimination d'eau (4b) .

6. Système (1) selon l'une quelconque des revendications précédentes, dans lequel le matériau d'absorption d'eau dans les dispositifs d'élimination d'eau (4a, 4b) est un matériau d'adsorption d'eau, de manière préférée du silicate ou de manière davantage préférée de la zéolite.

7. Système (1) selon l'une quelconque des revendications précédentes, dans lequel la batterie métal-air (2) est une batterie à capacité élevée, dans lequel le système (1) comprend en outre une batterie à haute puissance (10), en particulier une batterie lithium-ion, un super condensateur et/ou tout autre dispositif de stockage d'énergie électrochimique, dans lequel la batterie à haute capacité (2) et/ou la batterie à haute puissance (10) forment un système hybride de batterie, dans lequel la batterie à haute capacité (2) est adaptée pour fournir une première puissance électrique sensiblement constante et la batterie à haute puissance (10) est adaptée pour fournir de manière temporaire une deuxième puissance électrique variable, dans lequel la deuxième puissance électrique est plus élevée que la première puissance électrique et/ou la densité d'énergie spécifique de la batterie à haute capacité (2) est de 1,5 à 200, de manière préférée de 1,5 à 50, de manière davantage préférée de 1,5 à 10 et idéalement de 1,5 à 4,5 fois plus élevée que la densité d'énergie spécifique de la batterie à haute puissance (10).

8. Système (1) selon la revendication 7, dans lequel le premier module (5) est en outre adapté pour rediriger de l'énergie thermique, en particulier de la chaleur perdue, de la batterie à haute puissance (2) vers un premier échangeur de chaleur (8a) et/ou vers un deuxième échangeur de chaleur (8b).

9. Système (1) selon l'une quelconque des revendications précédentes, comprenant en outre un moteur à combustion interne (11), en particulier un prolongateur d'autonomie, dans lequel le premier module (5) est adapté en outre pour rediriger de l'énergie thermique, en particulier de la chaleur perdue, depuis le moteur à combustion interne (11) vers l'au moins un premier dispositif d'élimination d'eau (4a) et/ou l'au moins un deuxième dispositif d'élimination d'eau (4b), en particulier en intégrant un circuit de refroidissement du moteur à combustion interne (11) dans un circuit de chauffage (6) du premier module (5) .

10. Système (1) selon l'une quelconque des revendications 2 à 9, comprenant en outre un capteur (20) adapté pour mesurer le niveau d'humidité de gaz (16, 18) quittant le premier dispositif d'élimination d'eau et/ou le deuxième dispositif d'élimination d'eau, dans lequel l'unité de contrôle est adaptée pour contrôler la redirection de l'énergie thermique sur la base du niveau mesuré d'humidité.

11. Véhicule (13) comprenant une propulsion électrique (14), dans lequel de l'énergie électrique utilisée pour la propulsion électrique (14) est stockée dans un système (1) selon l'une quelconque des revendications 1 à 10.

12. Véhicule (13) selon la revendication 11, dans lequel le premier module (5) est adapté pour rediriger de l'énergie thermique perdue depuis d'autres sources de chaleur, en particulier la propulsion électrique (14) et/ou des dispositifs électroniques de puissance, dans le véhicule (13) vers un premier échangeur de chaleur (8a) et/ou un deuxième échangeur de chaleur (8b), en particulier en intégrant les sources de chaleur respectives dans un circuit de chauffage (6).

13. Procédé (100) d'alimentation en énergie électrique, comprenant les étapes suivantes :
de fonctionnement (101) d'une batterie métal-air (2), en particulier d'une batterie lithium-air, avec de l'air ambiant (3) ;
d'élimination d'eau (102) par déshumidification par adsorption et/ou par déshumidification par absorption depuis l'air ambiant (3) avec un premier dispositif d'élimination d'eau (4a) ou un deuxième dispositif d'élimination d'eau (4b), comprenant respectivement un matériau d'absorption d'eau ;
de redirection (103) d'énergie thermique, en particulier de chaleur perdue, d'au moins la batterie métal-air (2) vers le premier dispositif d'élimination d'eau (4a) pour régénérer le premier dispositif d'élimination d'eau (4a), en particulier son matériau d'absorption d'eau, par de l'énergie thermique pendant au moins une première période alors que le deuxième dispositif d'élimination d'eau (4b) déshumidifie l'air ambiant (3) ; et
de redirection (104) d'énergie thermique, en particulier de chaleur perdue, d'au moins la batterie métal-air (2) vers le deuxième dispositif d'élimination d'eau (4b) pour régénérer le deuxième dispositif d'élimination d'eau (4b), en particulier son matériau d'absorption d'eau, par de l'énergie thermique pendant au moins une deuxième période alors que le premier dispositif d'élimination d'eau (4a) déshumidifie l'air ambiant (3),
dans lequel le premier dispositif d'élimination d'eau et/ou le deuxième dispositif d'élimination d'eau comprennent une structure de support (9), en particulier une structure en nid d'abeille, sur laquelle le matériau d'adsorption et/ou le matériau d'absorption sont chargés et dans lequel, pendant une période de régénération, de l'air chaud (18) ayant une humidité relative faible ou de l'air sec chaud (17) rejeté depuis la batterie métal-air (2) entre dans le dispositif d'élimination d'eau (4a, 4b) circulant autour de la structure de support (9).

14. Procédé (100) selon la revendication 13, comprenant en outre les étapes suivantes :
d'alimentation (105) en une première puissance électrique sensiblement constante par la batterie métal-air (2) ;
d'alimentation (106) en une deuxième puissance électrique variable par une batterie à haute puissance (10), de manière préférée une batterie lithium-ion ;
d'adaptation (107) de la deuxième puissance électrique alimentée à une demande de puissance électrique d'une charge, en particulier d'une propulsion électrique (14) ;
de détermination (109) d'un niveau d'humidité d'un gaz (16, 18) quittant le premier dispositif d'élimination d'eau (4a) et/ou le deuxième dispositif d'élimination d'eau (4b) respectivement ; et
de contrôle (110) de la redirection de l'énergie thermique et de régénération (103, 104) du premier dispositif d'élimination d'eau (4a) et du deuxième dispositif d'élimination (4b) sur la base du niveau d'humidité du gaz (16, 18) quittant le premier dispositif d'élimination d'eau (4a) et/ou le deuxième dispositif d'élimination d'eau (4b) respectivement.

15. Procédé (109) selon la revendication 14, comprenant en outre l'étape suivante :
de chargement (108) de la batterie à haute puissance (10) en énergie électrique provenant de la batterie à haute capacité (2) si la puissance fournie par la batterie à haute capacité (2) est plus élevée sur la demande de puissance de la charge.
